# EUROPÄISCHE PATENTSCHRIFT

(11) **EP 2 619 997 B1**
(45) Veröffentlichungstag und Bekanntmachung des Hinweises auf die Patenterteilung: **15.04.2015**
(21) Anmeldenummer: 11779157.4
(22) Anmeldetag: 28.10.2011
(51) Int. Cl.: H04R 25/00, H04R 1/10

(54) **Kommunikationssystem mit Telefon und Hörvorrichtung sowie Übertragungsverfahren**
Communication system comprising a telephone and a listening device, and transmission method
Système de communication comportant un téléphone et un appareil d'écoute, et procédé de transmission

(30) Priorität: 25.03.2011 DE 102011006148; 04.11.2010 US 410024 P
(43) Veröffentlichungstag der Anmeldung: 31.07.2013
(73) Patentinhaber: Siemens Medical Instruments Pte. Ltd., Singapore 139959 (SG)
(72) Erfinder: WEIDNER, Tom, 91056 Erlangen (DE)
(74) Vertreter: Maier, Daniel Oliver
(86) Internationale Anmeldenummer: PCT/EP2011/069001
(87) Internationale Veröffentlichungsnummer: WO 2012/059428

(56) Entgegenhaltungen:
- EP-A1- 2 071 874
- WO-A2-01/54458
- US-A1- 2004 175 010
- US-A1- 2007 082 612

## Beschreibung

Die vorliegende Erfindung betrifft ein Kommunikationssystem mit einer Telefonvorrichtung zum Führen eines Telefongesprächs und einer Hörvorrichtung zum Tragen im oder am Ohr und zum Ausgeben von mit dem Gehör wahrnehmbaren Reizen, wobei ein Nutzsignal in der Telefonvorrichtung einer Signalverarbeitung unterworfen und auf akustischem Wege zu der Hörvorrichtung übertragen wird. Darüber hinaus betrifft die vorliegende Erfindung ein Verfahren zum Übertragen eines Nutzsignals von einer Telefonvorrichtung zu einer Hörvorrichtung auf akustischem Wege.

Unter einer Hörvorrichtung wird hier jedes im oder am Ohr tragbare, Schall oder sonstige mit dem Gehör wahrnehmbare Reize ausgebende Gerät, insbesondere ein Hörgerät, ein Headset, Kopfhörer und dergleichen verstanden. Darüber hinaus wird unter einer Telefonvorrichtung hier jedes Telefongerät verstanden, insbesondere ein Mobilfunktelefon, ein schnurloses Telefon, ein schnurgebundenes Telefon und dergleichen. Hörgeräte sind tragbare Hörvorrichtungen, die zur Versorgung von Schwerhörenden dienen. Um den zahlreichen individuellen Bedürfnissen entgegenzukommen, werden unterschiedliche Bauformen von Hörgeräten wie Hinter-dem-Ohr-Hörgeräte (HdO), Hörgerät mit externem Hörer (RIC: receiver in the canal) und In-dem-Ohr-Hörgeräte (IdO), z.B. auch Concha-Hörgeräte oder Kanal-Hörgeräte (ITE, CIC), bereitgestellt. Die beispielhaft aufgeführten Hörgeräte werden am Außenohr oder im Gehörgang getragen. Darüber hinaus stehen auf dem Markt aber auch Knochenleitungshörhilfen, implantierbare oder vibrotaktile Hörhilfen zur Verfügung. Dabei erfolgt die Stimulation des geschädigten Gehörs entweder mechanisch oder elektrisch.

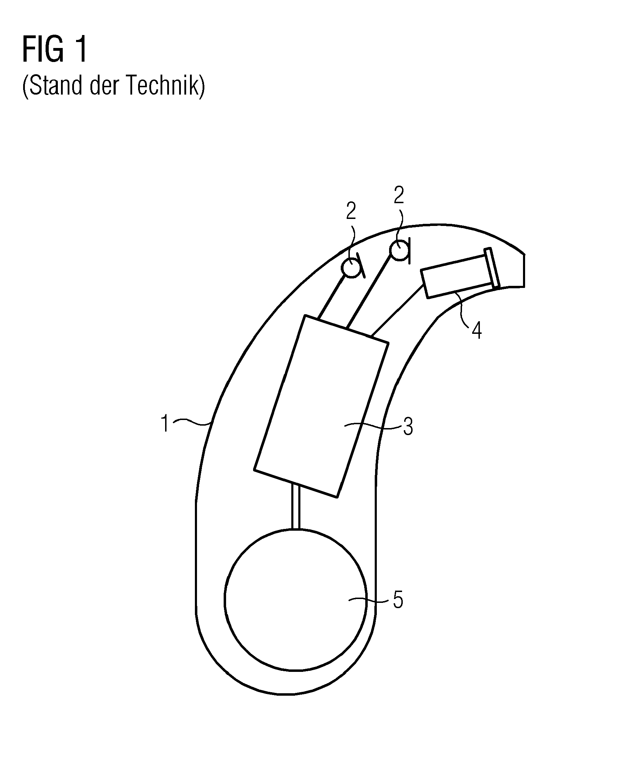

Hörgeräte besitzen prinzipiell als wesentliche Komponenten einen Eingangswandler, einen Verstärker und einen Ausgangswandler. Der Eingangswandler ist in der Regel ein Schallempfänger, z. B. ein Mikrofon, und/oder ein elektromagnetischer Empfänger, z. B. eine Induktionsspule. Der Ausgangswandler ist meist als elektroakustischer Wandler, z. B. Miniaturlautsprecher, oder als elektromechanischer Wandler, z. B. Knochenleitungshörer, realisiert. Der Verstärker ist üblicherweise in eine Signalverarbeitungseinheit integriert. Dieser prinzipielle Aufbau ist in FIG 1 am Beispiel eines Hinter-dem-Ohr-Hörgeräts dargestellt. In ein Hörgerätegehäuse 1 zum Tragen hinter dem Ohr sind ein oder mehrere Mikrofone 2 zur Aufnahme des Schalls aus der Umgebung eingebaut. Eine Signalverarbeitungseinheit 3, die ebenfalls in das Hörgerätegehäuse 1 integriert ist, verarbeitet die Mikrofonsignale und verstärkt sie. Das Ausgangssignal der Signalverarbeitungseinheit 3 wird an einen Lautsprecher bzw. Hörer 4 übertragen, der ein akustisches Signal ausgibt. Der Schall wird gegebenenfalls über einen Schallschlauch, der mit einer Otoplastik im Gehörgang fixiert ist, zum Trommelfell des Geräteträgers übertragen. Die Energieversorgung des Hörgeräts und insbesondere die der Signalverarbeitungseinheit 3 erfolgt durch eine ebenfalls ins Hörgerätegehäuse 1 integrierte Batterie 5.

Der Gebrauch eines Telefons stellt für einen Hörgeräteträger oftmals eine schwierige Situation dar. Insbesondere bestehen Schwierigkeiten bezüglich Rückkopplungen, wenn der Hörgeräteträger ein Telefon benutzt.

Bislang ist es beispielsweise möglich, dass ein Hörgerät ein in der näheren Umgebung befindliches Telefon detektieren kann. Dies wird mit speziellen Sensoren im Inneren des Hörgeräts, z.B. Magnetfeldsensoren, realisiert. Wenn an dem Telefon beispielsweise ein Magnet befestigt ist, kann das Hörgerät diesen Magneten bzw. das Telefon detektieren. Sobald das Telefon detektiert wurde, kann das Hörgerät in ein spezielles Programm schalten (z.B. Telefonprogramm) oder es kann seine Einstellungen dahingehend ändern, dass Rückkopplungsphänomene minimiert werden. Die Erfolge der Rückkopplungsreduktion sind jedoch begrenzt, da die Schallqualität typischer Telefone für Hörgeräteanwendungen nicht optimal ist, und eine geringere Verstärkung oder eine begrenzte Bandbreite die Sprachverständlichkeit noch weiter reduziert.

Aus der Druckschrift US 2005/0283263 A1 ist ein Hörgerätesystem bekannt, das ein Hörgerät und ein Telefon umfasst. Das Telefon und das Hörgerät stehen über ein Netzwerk kurzer Reichweite drahtlos in Verbindung.

Darüber hinaus ist aus der Druckschrift US 7,248,711 B2 ein Verfahren zur Frequenztransposition für ein Hörgerät oder ein Kommunikationsgerät beschrieben. Die niedrigen Frequenzen werden im Wesentlichen linear verschoben, während die höheren Frequenzen immer stärker verschoben werden. So können höhere Frequenzen in niedrigere Frequenzbereiche geschoben werden.

Die Aufgabe der vorliegenden Erfindung besteht darin, die Rückkopplungsprobleme in einem Kommunikationssystem mit einer Telefonvorrichtung und einer Hörvorrichtung zu reduzieren.

Erfindungsgemäß wird diese Aufgabe gelöst durch ein Kommunikationssystem mit einer Telefonvorrichtung zum Führen eines Telefongesprächs und einer Hörvorrichtung zum Tragen im oder am Ohr und zum Ausgeben von Schall, wobei ein Nutzsignal in der Telefonvorrichtung einer Signalverarbeitung unterworfen und auf akustischem Wege zu der Hörvorrichtung übertragen wird, wobei die Signalverarbeitung in der Telefonvorrichtung auf die Hörvorrichtung abgestimmt ist und die Hörvorrichtung für eine zu der Signalverarbeitung inverse Signalverarbeitung des Nutzsignals ausgebildet ist.

Darüber hinaus wird erfindungsgemäß bereitgestellt ein Verfahren zum Übertragen eines Nutzsignals von einer Telefonvorrichtung, welche zum Führen eines Telefongesprächs ausgebildet ist, zu einer Hörvorrichtung, welche zum Tragen im oder am Ohr und zum Ausgeben von Schall ausgebildet ist, durch Unterwerfen eines Nutzsignals in der Telefonvorrichtung einer Signalverarbeitung und Übertragen des Nutzsignals auf akustischem Wege zu der Hörvorrichtung, wobei die Signalverarbeitung in der Telefonvorrichtung auf die Hörvorrichtung abgestimmt ist und in der Hörvorrichtung eine zu der Signalverarbeitung in der Telefonvorrichtung inverse Signalverarbeitung des Nutzsignals erfolgt.

In vorteilhafter Weise erfolgt also die Übertragung des Nutzsignals von der Telefonvorrichtung zu der Hörvorrichtung auf akustischem Wege, wobei das Nutzsignal vorher einer spezifischen Signalverarbeitung in der Telefonvorrichtung unterzogen wurde. In der Hörvorrichtung wird dann diese spezifische Signalverarbeitung durch eine entsprechende inverse Signalverarbeitung rückgängig gemacht. Der Nutzer der Hörvorrichtung erhält dann als akustisches Ausgangssignal der Hörvorrichtung ein Signal, das einem Ausgangssignal der Telefonvorrichtung entspricht, welches nicht der spezifischen Signalverarbeitung unterzogen worden wäre. Durch die spezifische inverse Signalverarbeitung ist das Ausgangssignal der Hörvorrichtung akustisch verändert gegenüber dem Eingangssignal (unabhängig von der etwaigen Verstärkung der Hörvorrichtung). Wird nun das Ausgangssignal der Hörvorrichtung an den Eingang (das Mikrofon) der Hörvorrichtung rückgekoppelt, so kommt es mit einer geringeren Wahrscheinlichkeit zu einer konstruktiven Überlagerung beider Signale als in dem Fall, dass Eingangssignal und Ausgangssignal von ihrer Art her eher gleich sind. Mit der spezifischen Signalverarbeitung in der Telefonvorrichtung und der entsprechenden spezifischen, inversen Signalverarbeitung in der Hörvorrichtung werden also Rückkopplungsphänomene reduziert.

Vorzugsweise beinhaltet die Signalverarbeitung in der Telefonvorrichtung eine Frequenzkompression und die Signalverarbeitung in der Hörvorrichtung eine korrespondierende Frequenzexpansion. Umgekehrt kann auch in der Telefonvorrichtung eine Frequenzexpansion und in der Hörvorrichtung eine Frequenzkompression erfolgen. Alternativ oder zusätzlich kann speziell für die Rückkopplungsreduktion in der Telefonvorrichtung auch eine Frequenzverschiebung und in der Hörvorrichtung eine entsprechende Frequenzrückverschiebung stattfinden. Ebenso alternativ oder zusätzlich kann die Signalverarbeitung in der Telefonvorrichtung eine Signalverstärkung und die Signalverarbeitung in der Hörvorrichtung eine korrespondierende Signaldämpfung beinhalten. In jedem Fall erfolgt somit eine deutliche Veränderung des zu übertragenden akustischen Signals, sodass damit keine Rückkopplungsprobleme mit dem Ausgangssignal der Hörvorrichtung auftreten.

Des Weiteren ist es besonders vorteilhaft, wenn die Telefonvorrichtung dazu ausgebildet ist, dass mit einem akustischen Signal, das von der Telefonvorrichtung zu der Hörvorrichtung übertragen wird, Daten bezüglich einer Eigenschaft der Signalverarbeitung in der Telefonvorrichtung übertragen werden. So kann beispielsweise ein Parameter bezüglich der Frequenzkompression kodiert an die Hörvorrichtung übertragen werden, sodass diese ihre Frequenzexpansion entsprechend einstellt. Durch die Übertragung dieser Zusatzinformation ist das System entsprechend flexibel.

Des Weiteren kann mit der Telefonvorrichtung ein akustisches Steuersignal, das vorzugsweise nicht hörbar ist, an die Hörvorrichtung übertragbar sein, und die Hörvorrichtung dazu ausgebildet sein, dass sie die inverse Signalverarbeitung aktiviert, wenn sie das akustische Steuersignal erhält. Auf diese Weise kann sichergestellt werden, dass die Hörvorrichtung die inverse Signalverarbeitung nur dann einschaltet, wenn sie ein Eingangssignal von einer Telefonvorrichtung erhält, die die entsprechende spezifische Signalverarbeitung zur Rückkopplungsreduktion ausführt (unter "Rückkopplungsreduktion" wird hier das Reduzieren der Artefakte verstanden, die bei einer Rückkopplung auftreten, z.B. Rückkopplungspfeifen).

Entsprechend einer weiteren Ausführungsform wird die Telefonvorrichtung von der Hörvorrichtung automatisch detektiert, und in Abhängigkeit von dem Detektionsergebnis wird die inverse Signalverarbeitung in der Hörvorrichtung aktiviert. Hierzu ist es nicht notwendig, dass die Telefonvorrichtung aktiv ein Signal an die Hörvorrichtung schickt. Vielmehr genügt es beispielsweise, wenn die Hörvorrichtung beispielsweise mit einem Magnetfeldsensor einen Magneten der Telefonvorrichtung und damit indirekt das Telefon detektiert.

Weiterhin können die Hörvorrichtung und die Telefonvorrichtung dazu ausgebildet sein, Algorithmen für die Signalverarbeitung und die inverse Signalverarbeitung festzulegen und aneinander anzupassen. Die beiden Vorrichtungen verhandeln damit die Art und Weise, wie das Nutzsignal für die akustische Übertragung verändert wird. Die Hörvorrichtung macht dann automatisch in passender Weise diese Veränderung rückgängig. Auf diese Weise lässt sich ein sehr flexibles Kommunikationssystem realisieren, bei dem sich die Komponenten gegenseitig abstimmen.

Weiter kann das Zusammenwirken von Hörvorrichtung und Telefonvorrichtung durch ein sogenanntes App gesteuert werden. Der Begriff App (englisch kurz für application) bezeichnet grundsätzlich ein beliebiges computerausführbares Anwendungsprogramm. Vorliegend ist insbesondere eine Anwendung für moderne Telefonvorrichtungen, wie Smartphones und Tablet-Computer, gemeint. Die Steuerung durch ein App kann sich die Benutzeroberfläche der Telefonvorrichtung zunutze machen und eine besonders intuitive und effiziente Nutzersteuerung ermöglichen.

Die vorliegende Erfindung wird anhand der beigefügten Zeichnungen näher erläutert, in denen zeigen:
- FIG 1: eine Prinzipskizze eines Hörgeräts gemäß dem Stand der Technik; und
- FIG 2: ein Diagramm zur Veranschaulichung eines erfindungsgemäßen Kommunikationssystems.

Die nachfolgend näher geschilderten Ausführungsbeispiele stellen bevorzugte Ausführungsformen der vorliegenden Erfindung dar.

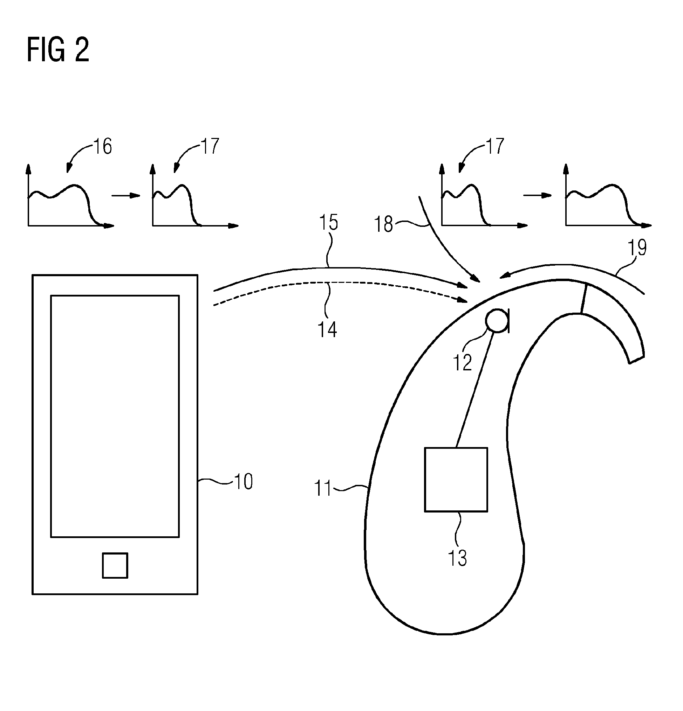

Das in der FIG 2 dargestellte erfindungsgemäße Kommunikationssystem umfasst als Telefonvorrichtung ein Mobilfunktelefon 10 und als Hörvorrichtung ein Hörgerät 11 (hier ein Hinter-dem-Ohr-Hörgerät). Auch wenn in dem Beispiel ein Mobiltelefon als Telefonvorrichtung gewählt ist, kann beispielsweise auch ein Festnetztelefon, kabelgebunden oder schnurlos, als Telefonvorrichtung dienen. Ebenso kann anstelle des Hinter-dem-Ohr-Hörgeräts auch ein In-dem-Ohr-Hörgerät oder gegebenenfalls auch ein Headset oder Kopfhörer als Hörvorrichtung eingesetzt werden.

Das Hörgerät 11 besitzt im Wesentlichen die gleichen Signalverarbeitungskomponenten wie das Hörgerät in FIG 1. Es wird diesbezüglich daher auf die Beschreibung von FIG 1 verwiesen. Der Übersicht halber sind jedoch in FIG 2 nur das Mikrofon 12 und die Signalverarbeitungseinrichtung 13 eingezeichnet. Das Mikrofon 12 nimmt den Umgebungsschall auf, wandelt ihn in ein entsprechendes elektrisches Signal und leitet dieses weiter an die Signalverarbeitung 13. Darüber hinaus kann das Mikrofon 12 des Hörgeräts 11 auch spezifische Schallsignale 14 (=Steuersignal) von dem Mobilfunktelefon 10 aufnehmen. Diese spezifischen Schallsignale werden in der Signalverarbeitungseinrichtung 13 registriert, und das Hörgerät 11 schaltet sich in Abhängigkeit von diesen spezifischen Schallsignalen in entsprechende vorbestimmte Zustände.

Für die vorliegende Erfindung ist jedoch die Übertragung des Nutzsignals 15 auf akustischem Wege zwischen dem Mobiltelefon 10 und dem Hörgerät 11 von entscheidender Bedeutung. In dem Mobiltelefon 10 (allgemein Telefonvorrichtung) erfolgt eine Vorverarbeitung des akustisch zu übertragenden Nutzsignals. Diese Vorverarbeitung dient ausschließlich zum Zwecke des Ausgebens eines anderen Schallsignals als dasjenige, das vom Hörgeräteträger bzw. Nutzer der Hörvorrichtung gehört werden soll. Es wird also dieses durch die Vorverarbeitung veränderte Nutzsignal 15 akustisch zu dem Hörgerät 11 übertragen. Dort findet eine inverse Signalverarbeitung statt, die die Vorverarbeitung des Mobiltelefons 10 rückgängig macht. Das Ausgangssignal des Hörgeräts 11 entspricht dann, abgesehen von einer etwaigen Verstärkung durch das Hörgerät, demjenigen Signal, das von dem Mobiltelefon 10 ohne die Vorverarbeitung ausgegeben wäre.

In einem konkreten Beispiel besitzt ein Nutzsignal, das in einem Betrieb ohne Hörgerät vom Mobiltelefon 10 ausgegeben werden sollte, ein Spektrum 16. Dieses Signal wird jedoch nicht direkt akustisch ausgegeben, sondern vorher einer Frequenzkompression unterzogen, sodass sich ein Signal mit dem komprimierten Spektrum 17 ergibt. Dieses Signal mit dem komprimierten Spektrum 17 wird nun von dem Mobiltelefon 10 ausgegeben und akustisch als Nutzsignal 15 zu dem Hörgerät 11 übertragen. Zusätzlich kann das Telefon 10 auch ein oder mehrere spezielle Schall- bzw. Kommunikationssignale 14 (z.B. einen Pilotton) erzeugen, die über den gleichen akustischen Kanal wie das Nutzsignal 15 vom Telefon 10 zum Hörgerät 11 übertragen werden.

Das am Hörgerät 11 eingehende Nutzsignal 15 besitzt also das komprimierte Spektrum 17. Das Hörgerät 11 bzw. dessen Signalverarbeitung führt nun eine inverse Frequenzkompression, d.h. eine Frequenzexpansion, der gesamten Eingangssignale durch. Dazu zählen neben dem Nutzsignal 15 auch Schallsignale 18 aus der Umgebung und Rückkopplungssignale 19 vom Schallausgang des Hörgeräts 11. Durch die inverse Kompression (allgemein inverse Signalverarbeitung gegenüber der spezifisch für die Übertragung durchgeführten Signalverarbeitung im Mobiltelefon) wird das Nutzsignal in ein normales Telefonsignal mit dem dekomprimierten Spektrum 16 zurückgewandelt. Durch diese Verarbeitung im Hörgerät 11 werden auch alle anderen akustischen Signale 18, 19 aus der Umgebung bzw. von der Rückkopplung dekomprimiert. Auf diese Weise wird die akustische Rückkopplung zusammen mit dem Rückkopplungskompensator des Hörgeräts 11 (in FIG 2 nicht eingezeichnet) stark reduziert.

Bei einer speziellen Ausführungsform erfolgt die inverse Frequenzkompression nur dann, wenn das Hörgerät 11 ein spezielles Kommunikationssignal 14 (z.B. den Pilotton) detektiert. Es gibt aber auch andere Möglichkeiten, die inverse Frequenzkompression in dem Hörgerät 11 zu aktivieren. Beispielsweise besitzt das Hörgerät 11 einen Magnetfeldsensor, der das Magnetfeld eines Lautsprechers des Mobiltelefons 10 oder eines kleinen Magneten, der an dem Mobiltelefon 10 angebracht ist, detektiert. Im Falle der Detektion wird dann die inverse Frequenzkompression in dem Hörgerät 11 aktiviert. Auch andere Aktivierungsmöglichkeiten, die beispielsweise vom automatischen Schalten eines Hörgeräts in einen Telefonmodus bekannt sind, können hier eingesetzt werden.

Das oder die Kommunikationssignale 14, die zusätzlich zu dem Nutzsignal 15 vom Mobiltelefon zum Hörgerät 11 übertragen werden, können beispielsweise auch Information über die Art und Weise der Frequenzkompression im Telefon tragen. Mit dieser Information kann dann das Hörgerät 11 den inversen Algorithmus entsprechend anpassen.

Das Telefon 10 und das Hörgerät 11 bilden hier also ein kombiniertes Kommunikationssystem, um für eine hörgeschädigte Person eine verbesserte Telefonkonversation zu ermöglichen. Es werden dabei die technischen Vorteile beider Geräte für eine einzige Anwendung genutzt. Insbesondere minimiert die Frequenzkompression im Telefon 10 zusammen mit der inversen Frequenzkompression im Hörgerät 11 Rückkopplungen deutlich, da die Rückkopplungssignale 19 unkomprimiert am Mikrofon 12 auftreten, während das Nutzsignal 15 komprimiert ist. Dadurch entstehen deutliche Vorteile für Hörgeräteträger.

Die Kombination der Frequenzkompression in dem Telefon 10 und die inverse Frequenzkompression in dem Hörgerät 11 erhält für den Hörgeräteträger die ursprüngliche Schallqualität des Telefonsignals. Darüber hinaus können die Kommunikationssignale 14 des Ausgangsschalls des Telefons 10 die beiden Geräte 10, 11 im Hinblick auf eine optimale Einstellung der Algorithmen synchronisieren. Dazu können die beiden Geräte beispielsweise ein entsprechendes Protokoll oder entsprechende Verarbeitungsalgorithmen automatisch verhandeln. Natürlich werden diese speziellen Kommunikationssignale akustisch so übertragen werden, dass sie nicht hörbar sind.

Nachfolgend werden weitere Ausführungsbeispiele näher erläutert. Beispielsweise kann entsprechend einer Weiterbildung die spezielle Signalverarbeitung, insbesondere die Frequenzkompression in dem Telefon bzw. der Telefonvorrichtung durch den Telefonbenutzer bei Bedarf manuell mittels dafür installierter Software aktiviert werden. Alternativ kann die Aktivierung natürlich auch automatisch erfolgen, wenn beispielsweise das Telefon in seiner Nähe einen Hörgeräteträger "erkennt". Wird die Frequenzkompression dann manuell oder automatisch aktiviert, so erfolgt, wie oben geschildert, im Hörgerät die inverse Frequenzkompression und der ursprüngliche Telefonschall wird am Hörgeräteausgang ausgegeben zusammen mit dem modifizierten Umgebungsschall (einschließlich des modifizierten Rückkopplungsschalls). Die in der Telefonvorrichtung für die spezifische Signalverarbeitung notwendige Software kann beispielsweise vom Benutzer als zusätzliches Softwareprogramm installiert werden.

Die obigen Ausführungsbeispiele wurden stets im Zusammenhang mit einer Frequenzkompression in der Telefonvorrichtung und einer inversen Frequenzkompression in der Hörvorrichtung geschildert. Anstelle der oder zusätzlich zu der Frequenzkompression kann als spezifische Signalverarbeitung bzw. Vorverarbeitung in der Telefonvorrichtung auch beispielsweise eine Frequenzverschiebung erfolgen. In der Hörvorrichtung erfolgt dann eine entsprechende Rückverschiebung als inverse Signalverarbeitung. Ebenso kann in der Telefonvorrichtung eine Frequenzexpansion des Nutzsignals erfolgen und in der Hörvorrichtung eine entsprechende Kompression (= inverse Expansion).

Eine Kombination von Frequenzkompression und Frequenzverschiebung in der Telefonvorrichtung kann derart erfolgen, dass sich das nach dieser Signalverarbeitung modifizierte Nutz- bzw. Telefonsignal in einem Frequenzbereich befindet, in dem nur wenige natürliche Schallanteile liegen. Ein Rückschieben und eine Expansion der Signalfrequenzen in der Hörvorrichtung eliminiert dann die meisten Schallanteile 18, 19 aus der Umgebung, was die Sprachverständlichkeit während des Telefongesprächs deutlich verbessert.

Anstelle der oder zusätzlich zu der Frequenzkompression in der Telefonvorrichtung kann das Nutzsignal von der Telefonvorrichtung auch über ein vorgegebenes Normalmaß hinaus verstärkt werden, um das Signal-Rausch-Verhältnis für das Mikrofon der Hörvorrichtung zu verbessern bzw. um die Leistungsfähigkeit des Ausgangswandlers des Telefons zu kompensieren (z.B. die Tiefpassfunktion auszugleichen).

## Patentansprüche

1. Kommunikationssystem mit
- einer Telefonvorrichtung (10) zum Führen eines Telefongesprächs und
- einer Hörvorrichtung (11) die am Kopf tragbar ist, wobei
- ein Nutzsignal (15) in der Telefonvorrichtung (10) einer Signalverarbeitung unterworfen und auf akustischem Wege zu der Hörvorrichtung (11) übertragen wird,
**dadurch gekennzeichnet, dass**
- die Signalverarbeitung in der Telefonvorrichtung (10) auf die Hörvorrichtung (11) abgestimmt ist und
- die Hörvorrichtung (11) für eine zu der Signalverarbeitung inverse Signalverarbeitung des Nutzsignals (15) ausgebildet ist.

2. Kommunikationssystem nach Anspruch 1, wobei die Signalverarbeitung in der Telefonvorrichtung (10) eine Frequenzkompression und die Signalverarbeitung in der Hörvorrichtung (11) eine korrespondierende Frequenzexpansion beinhaltet.

3. Kommunikationssystem nach Anspruch 1, wobei die Signalverarbeitung in der Telefonvorrichtung (10) eine Frequenzexpansion und die Signalverarbeitung in der Hörvorrichtung (11) eine korrespondierende Frequenzkompression beinhaltet.

4. Kommunikationssystem nach Anspruch 1, wobei die Signalverarbeitung in der Telefonvorrichtung (10) eine Frequenzverschiebung und die Signalverarbeitung in der Hörvorrichtung (11) eine korrespondierende Frequenzrückverschiebung beinhaltet.

5. Kommunikationssystem nach Anspruch 1, wobei die Signalverarbeitung in der Telefonvorrichtung (10) eine Signalverstärkung und die Signalverarbeitung in der Hörvorrichtung (11) eine korrespondierende Signaldämpfung beinhaltet.

6. Kommunikationssystem nach einem der vorhergehenden Ansprüche, wobei die Telefonvorrichtung (10) dazu ausgebildet ist, dass mit einem akustischen Signal, das von der Telefonvorrichtung (10) zu der Hörvorrichtung (11) übertragen wird, Daten bezüglich einer Eigenschaft der Signalverarbeitung in der Telefonvorrichtung (10) übertragen werden.

7. Kommunikationssystem nach einem der vorhergehenden Ansprüche, wobei mit der Telefonvorrichtung (10) ein akustisches Steuersignal (14), das vorzugsweise nicht hörbar ist, an die Hörvorrichtung (11) übertragbar ist, und die Hörvorrichtung (11) dazu ausgebildet ist, dass sie die inverse Signalverarbeitung aktiviert, wenn sie das akustische Steuersignal erhält (14).

8. Kommunikationssystem nach einem der vorhergehenden Ansprüche, wobei durch die Hörvorrichtung (11) die Telefonvorrichtung (10) automatisch detektierbar ist, und in Abhängigkeit von dem Detektionsergebnis die inverse Signalverarbeitung in der Hörvorrichtung (11) aktiviert wird.

9. Kommunikationssystem nach einem der vorhergehenden Ansprüche, wobei die Hörvorrichtung (11) und die Telefonvorrichtung (10) dazu ausgebildet sind, Algorithmen für die Signalverarbeitung und die inverse Signalverarbeitung festzulegen und aneinander anzupassen.

10. Kommunikationssystem nach einem der Ansprüche 1 bis 9, wobei die Signalverarbeitung in der Telefonvorrichtung vom Benutzer aktiviert und deaktiviert werden kann.

11. Kommunikationssystem nach Anspruch 10, wobei die Aktivierung und Deaktivierung mittels eines auf der Telefonvorrichtung installierten Softwareprogramms ausführbar ist.

12. Kommunikationssystem nach Anspruch 1, wobei die Signalverarbeitung in der Telefonvorrichtung vom Benutzer als zusätzliches Softwareprogramm installierbar ist.

13. Verfahren zum Übertragen eines Nutzsignals (15) von einer Telefonvorrichtung (10), welche zum Führen eines Telefongesprächs ausgebildet ist, zu einer Hörvorrichtung (11), welche am Kopf tragbar ist, durch
- Unterwerfen eines Nutzsignals (15) in der Telefonvorrichtung (10) einer Signalverarbeitung und
- Übertragen des Nutzsignals (15) auf akustischem Wege zu der Hörvorrichtung (11),
**dadurch gekennzeichnet, dass**
- die Signalverarbeitung in der Telefonvorrichtung (10) auf die Hörvorrichtung (11) abgestimmt ist und
- in der Hörvorrichtung (11) eine zu der Signalverarbeitung inverse Signalverarbeitung des Nutzsignals (15) erfolgt.

## Claims

1. Communication system comprising
- a telephone device (10) for conducting a telephone conversation and
- a hearing apparatus (11) which can be worn on the head, wherein
- a useful signal (15) is subjected to signal processing in the telephone device (10) and is acoustically transmitted to the hearing apparatus (11),
**characterised in that**
- signal processing in the telephone device (10) is tuned to the hearing apparatus (11) and
- the hearing apparatus (11) is designed to process the useful signal (15) inversely to the signal processing.

2. Communication system according to claim 1, wherein signal processing in the telephone device (10) includes a frequency compression and signal processing in the hearing apparatus (11) includes a corresponding frequency expansion.

3. Communication system according to claim 1, wherein signal processing in the telephone device (10) includes a frequency expansion and signal processing in the hearing apparatus (11) includes a corresponding frequency compression.

4. Communication system according to claim 1, wherein signal processing in the telephone device (10) includes a frequency shift and signal processing in the hearing apparatus (11) includes a corresponding frequency back-shift.

5. Communication system according to claim 1, wherein signal processing in the telephone device (10) includes a signal amplification and signal processing in the hearing apparatus (11) includes corresponding signal damping.

6. Communication system according to one of the preceding claims, wherein the telephone device (10) is designed such that data relating to a property of signal processing is transmitted in the telephone device (10) with an acoustic signal which is transmitted from the telephone device (10) to the hearing apparatus (11).

7. Communication system according to one of the preceding claims, wherein an acoustic control signal (14), which is preferably inaudible, can be transmitted by the telephone device (10) to the hearing apparatus (11), and the hearing apparatus (11) is designed such that it activates inverse signal processing if it receives the acoustic control signal (14).

8. Communication system according to one of the preceding claims, wherein the telephone device (10) can be automatically detected by the hearing apparatus (11), and inverse signal processing is activated in the hearing apparatus (11) as a function of the detection result.

9. Communication system according to one of the preceding claims, wherein the hearing apparatus (11) and the telephone device (10) are designed to determine algorithms for signal processing and inverse signal processing and to adjust them to each other.

10. Communication system according to one of claims 1 to 9, wherein signal processing in the telephone device can be activated and deactivated by the user.

11. Communication system according to claim 10, wherein activation and deactivation can be performed by means of a software program installed on the telephone device.

12. Communication system according to claim 1, wherein signal processing can be installed in the telephone device by the user as an additional software program.

13. Method for transmitting a useful signal (15) from a telephone device (10), which is designed for conducting a telephone conversation, to a hearing apparatus (11), which can be worn on the head, by
- subjecting a useful signal (15) in the telephone device (10) to signal processing and
- transmitting the useful signal (15) acoustically to the hearing apparatus (11),
**characterised in that**
- signal processing in the telephone device (10) is tuned to the hearing apparatus (11), and
- in the hearing apparatus (11) the useful signal (15) is processed inversely to the signal processing.

## Revendications

1. Système de communication comprenant
- un dispositif (10) de téléphone pour avoir une conversation téléphonique et
- un dispositif (11) d'audition, qui peut être porté à la tête, dans lequel
- un signal (15) utile est soumis, dans le dispositif (10) téléphonique, à un traitement du signal et est transmis, par voie acoustique, au dispositif (11) d'audition,
**caractérisé en ce que**
- le traitement du signal, dans le dispositif (10) téléphonique, est adapté au dispositif (11) d'audition et
- le dispositif (11) d'audition est constitué pour un traitement du signal (15) utile, inverse du traitement du signal.

2. Système de communication suivant la revendication 1, dans lequel le traitement du signal, dans le dispositif (10) téléphonique, comporte une compression de fréquences et le traitement du signal, dans le dispositif (11) d'audition, comporte une expansion de fréquences correspondante.

3. Système de communication suivant la revendication 1, dans lequel le traitement du signal, dans le dispositif (10) téléphonique, comporte une expansion de fréquences et le traitement du signal, dans le dispositif (11) d'audition, comporte une compression de fréquences correspondante.

4. Système de communication suivant la revendication 1, dans lequel le traitement du signal, dans le dispositif (10) téléphonique, comporte un décalage de fréquences et le traitement du signal, dans le dispositif (11) d'audition, comporte un redécalage de fréquences correspondant.

5. Système de communication suivant la revendication 1, dans lequel le traitement du signal, dans le dispositif (10) téléphonique, comporte une amplification du signal et le traitement du signal, dans le dispositif (11) d'audition, comporte une atténuation du signal correspondante.

6. Système de communication suivant l'une des revendications précédentes, dans lequel le dispositif (10) téléphonique est constitué de manière à transmettre, par un signal acoustique qui est transmis du dispositif (10) téléphonique au dispositif (11) d'audition, des données concernant une propriété du traitement du signal dans le dispositif (10) téléphonique.

7. Système de communication suivant l'une des revendications précédentes, dans lequel il peut être transmis, par le dispositif (10) téléphonique, un signal (14) acoustique de commande, de préférence inaudible, au dispositif (11) d'audition et le dispositif (11) d'audition est constitué de manière à activer le traitement inverse du signal, lorsqu'il reçoit le signal (14) acoustique de commande.

8. Système de communication suivant l'une des revendications précédentes, dans lequel le dispositif (10) téléphonique peut être détecté automatiquement par le dispositif (11) d'audition et, en fonction du résultat de la détection, le traitement inverse du signal est activé dans le dispositif (11) d'audition.

9. Système de communication suivant l'une des revendications précédentes, dans lequel le dispositif (11) d'audition et le dispositif (10) téléphonique sont constitués pour fixer et adapter l'un à l'autre des algorithmes de traitement du signal et de traitement inverse du signal.

10. Système de communication suivant l'une des revendications 1 à 9, dans lequel le traitement du signal, dans le dispositif téléphonique, peut être activé et désactivé par l'utilisateur.

11. Système de communication suivant la revendication 10, dans lequel l'activation et la désactivation peuvent être effectuées au moyen d'un programme logiciel installé sur le dispositif téléphonique.

12. Système de communication suivant la revendication 1, dans lequel le traitement du signal, dans le dispositif téléphonique, peut être installé par l'utilisateur en tant que programme logiciel supplémentaire.

13. Procédé de transmission d'un signal (15) utile d'un dispositif (10) téléphonique, qui est constitué pour avoir une conversation téléphonique, à un dispositif (11) d'audition, qui peut être porté à la tête, en
- soumettant un signal (15) utile, dans le dispositif (10) électronique, à un traitement du signal et
- transmettant le signal (15) utile, par voie acoustique, au dispositif (11) d'audition,
**caractérisé en ce que**
- on adapte le signal de traitement, dans le dispositif (10) téléphonique, au dispositif (11) d'audition et
- dans le dispositif (11) d'audition, on effectue un traitement du signal (15) utile, inverse du traitement du signal.
